# EUROPEAN PATENT APPLICATION

(11) **EP 2 537 449 A1**
(43) Date of publication of application: **26.12.2012**
(21) Application number: 12170894.5
(22) Date of filing: 05.06.2012
(51) Int. Cl.: A47J 31/36, A47J 31/56

(54) **An espresso coffee machine provided with independent control of operating temperature of each coffee dispensing unit**

(30) Priority: 20.06.2011 IT MC20110031
(71) Applicant: Nuova Simonelli S.p.A., 62031 Belforte del Chienti (MC) (IT)
(72) Inventor: Angeletti, Luciano, 62010 POLLENZA (MC) (IT)
(74) Representative: Baldi, Claudio

(57) **Abstract**

The present invention relates to a coffee machine provided with a heat generator (8) and a temperature probe (9) in each coffee dispensing unit (4), in order to control the operating temperature of each coffee dispensing unit (4) independently.

## Description

The present patent application for industrial invention relates to an espresso coffee machine provided with independent control of the operating temperature of each coffee dispensing unit.

The peculiarities and advantages of the present invention will be more evident further to a short description of the prior art.

W02008/087677, EP0465877 and US 5,551,331 disclose traditional coffee machines comprising:
- a main boiler adapted to produce hot water and steam at high temperature for the general operation of the machine; and
- multiple coffee dispensing units provided with heating resistance to heat the body of the dispensing unit.

Such coffee machines are not provided with boiler dedicated to each dispensing unit. For this reason, water coming from the main boiler is subject to heat shock and does not achieve the ideal temperature for coffee extraction in each dispensing unit.

Such a drawback is partially remedied in W02010/113125, which discloses a coffee machine comprising a main boiler and a dedicated boiler integrated in the body of the dispensing unit. The dedicated boiler heats water inside the dispensing unit. Such a machine does not provide for a heating system of the body of the dispensing unit separate from the dedicated boiler.

In such a situation, the main boiler is used to preheat water in order to feed the various dispensing units, whereas the task of bringing the same water to the "final" operating temperature is entrusted to said dedicated boilers.

In fact, it was assumed that the dedicated boiler, which is integrated into the dispensing unit, allowed water to wet coffee powder at the ideal operating temperature, meaning the same temperature that was reached inside the dedicated boiler.

A careful evaluation of the traditional technology has identified a serious drawback. In fact, it was observed that water coming out of each dedicated boiler suffers a significant temperature reduction, not only because of the fact that it travels between the dedicated boiler and the dispensing unit, it actually being a rather short travel, but most of all because of the contact with the coffee powder loaded in the dispensing unit basically at room temperature.

It is true that the structure of each dispensing unit receives by conduction some of the heat generated by the dedicated boiler integrated into it; however, such limited "indirect" heating is not sufficient to avoid said heat shock suffered by water coming out of the dedicated boiler.

Moreover, considering that the dispensing time of an espresso coffee is generally comprised between 25 and 35 seconds, it can be easily understood that, in such lapse of time, the water gradually penetrating the coffee powder has a variable temperature.

In view of the above, it can be stated that in current coffee machines it is basically impossible to guarantee that the water wetting coffee powder in each dispensing unit has the temperature that is considered to be ideal for the various specific requirements.

The impossibility to exactly control the water operating temperature negatively affects the quality of the espresso coffee, given the fact that only a specific, constant temperature of the water can optimize the extraction of oils, proteins, gases and aromas contained in coffee powder.

Starting from the above critical evaluations on the consolidated technology, the specific purpose of the present invention is to provide an espresso coffee machine that exactly controls the water temperature in each dispensing unit and, if necessary, regulates said temperature selectively according to the specific requirements.

The coffee machine of the present invention comprises a main boiler, a dedicated boiler separate from the dispensing unit and a specific heating system for each of the dispensing units of the machine.

The capability of maintaining the structure of each dispensing unit at a desired operating temperature allows the water reaching the dispensing unit from the dedicated boiler not to suffer the detrimental heat shock that is typical of the prior art.

Actually, there is another very important consequence given by the fact that the temperature of each dispensing unit is controlled. Reference is made to the fact that the dispensing unit can transfer a large amount of thermal energy to the coffee powder loaded in it, in such manner that, when it comes in contact with it, water coming out of the dedicated boiler does not suffer a significant temperature drop.

Moreover, the present invention also allows setting different temperatures on the dedicated boiler and on the dispensing unit, with especially advantageous practical results.

In fact, by modulating the temperature parameters of the boiler and dispensing unit during the so-called extraction (meaning the step in which hot water, in contact with coffee powder, generates the emulsion that is converted into espresso coffee), it is possible to improve the efficiency of this specific operation and consequently the quality of coffee.

It must be considered that the weight of coffee powder can change considerably according to country and coffee blend. Therefore, only the capability of changing the temperature parameters of the dispensing unit and corresponding boiler will allow to adjust the performance of the coffee machine according to the specific operating requirements from time to time.

Such a separate temperature control is extremely advantageous to obtain espresso coffee of the best quality, regardless of the different origin of the coffee powder and the different roasting curves used by the various toasting machines.

An additional and last advantage given by the capability of setting the desired temperature in each dispensing unit can be appreciated considering that, in the final part of said extraction process, coffee powder tends to become very hot, having absorbed a large quantity of thermal energy released by the water passing through it.

It must be noted that according to the coffee machine of the invention the dedicated boiler is physically separate from the dispensing unit. Therefore, throughout the entire supply, the temperature of the dispensing unit and consequently of the dispensed coffee is more stable than in the systems of the prior art (which have a dedicated boiler for each dispensing unit, which is attached to the dispensing unit). In fact, according to the coffee machine of the invention, the dispensing unit receives water at the correct temperature from the dedicated boiler, which is physically separate from the dispensing unit.

In such a situation, the exact temperature control in the dispensing unit avoids an excessive temperature of the coffee powder, given the fact that "over-extraction" phenomena would be generated in such a condition, giving an unpleasant sour, burnt taste to coffee.

For explanatory reasons, the description of the invention continues with reference to the attached drawings, which only have an illustrative, not limiting value, wherein:

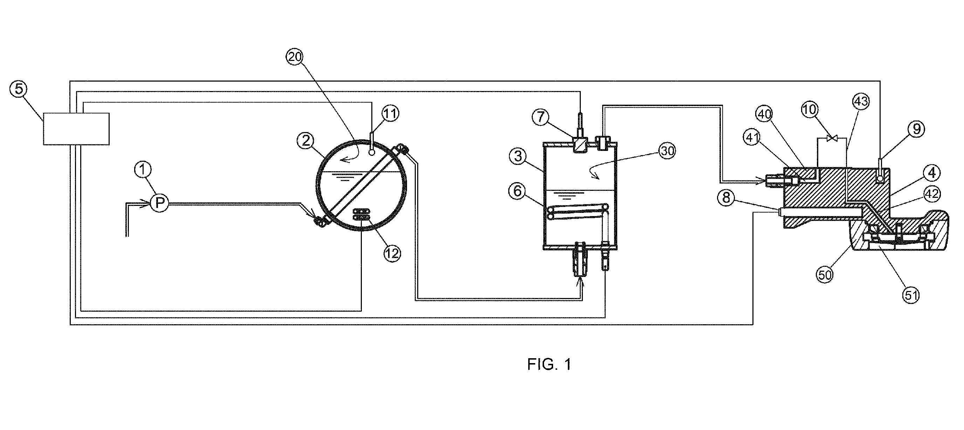

Fig. 1 is a block diagram of the coffee machine of the invention, showing some parts in a sectional axial view; and

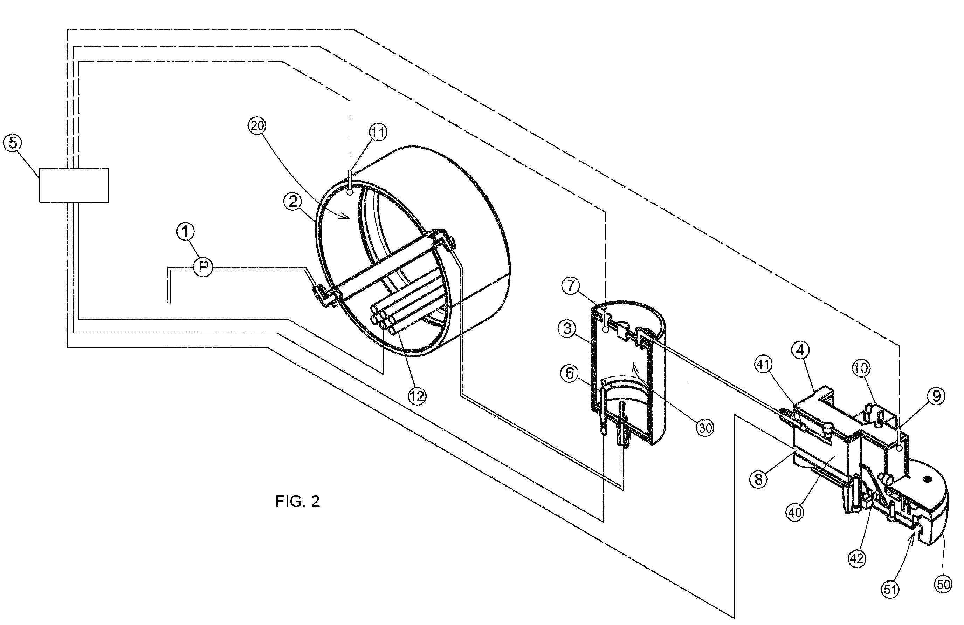

Fig. 2 is a block diagram as Fig. 1, showing some parts in a perspective partially sectional view.

Referring to the figures, the coffee machine of the invention comprises:
- a pump to supply water (1);
- a main boiler (2) for preheating of water supplied by the pump (1);
- at least one dispensing unit (4) for coffee extraction,
- at least one dedicated boiler (3) supplied with water from the main boiler (2) and adapted to supply a dispensing unit (4);
- an electronic control unit (5) used to manage and control water temperature in said one or more dedicated boilers (3).

The main boiler (2) comprises a chamber (20) that contains the water to be heated, an electrical heating resistance (12) disposed in the chamber (20) in contact with the water to be heated and a pressure probe (11) disposed in the chamber to detect the pressure of steam in the main boiler (2).

Each dedicated boiler (3) is physically separate from the main boiler (2) and the dispensing unit (3). Each dedicated boiler (2) comprises a chamber (30) that receives the water to be heated from the main boiler, an electrical heating resistance (6), for example a heating coil, disposed in the chamber (30) in contact with the water to be heated and a temperature probe (7).

The electrical heating resistance (6) and the temperature probe (7) of the dedicated boiler (3) are interfaced with the electronic control unit (5).

The dispensing unit (4) comprises a body (40) and a filter-holder (50) provided with a seat (51) adapted to receive a filter with coffee.

The body (40) of the dispensing unit is provided with an inlet conduit (41) that receives water from the dedicated boiler (3) and an outlet conduit (42) that sends water to the seat (51) of the filter holder (50). The inlet and outlet conduits (41, 42) are connected with a connection pipe (43) wherein an electrovalve (10) is disposed.

An electrical heating resistance (8) and a temperature probe (9) are disposed in the body (40) of the dispensing unit to heat the body of the dispensing unit and detect the temperature of the body of the dispensing unit. Said electrical heating resistance (8) and temperature probe (9) are interfaced with the electronic control unit (5) used to manage and control the temperature in the dispensing unit (4). The control unit (5) is adapted to manage the temperature of the body (40) of the various dispensing units (4) independently from the temperature of the water of the dedicated boilers (3).

## Claims

1. A coffee machine comprising:
- a pump (1) to supply water,
- a main boiler (2) to preheat the water supplied by the pump (1);
- at least one dispensing unit (4) comprising a body (40) and a filter-holder (50) adapted to receive a filter with coffee, the body (40) being provided with water inlet and outlet conduits (41, 42) for coffee extraction,
- at least one dedicated boiler (3) that receives water from the main boiler (2), heats the water and supplies hot water to a dispensing unit (4),
- an electronic control unit (5) used to manage and control the temperature of the water in said at least one dedicated boiler (3).
**characterized in that**
said dedicated boiler (3) is physically separate from the body (40) of said dispensing unit, and
said coffee machine also comprises:
- a heat generator (8) disposed in the body (40) of the dispensing unit to heat the body (40) of the dispensing unit, and
- a temperature probe (9) disposed in the body (40) of the dispensing unit to detect the temperature of the body (40) of the dispensing unit;
said heat generator (8) and temperature probe (9) being interfaced with said electronic control unit (5).

2. The coffee machine of claim 1, **characterized in that** said heat generator (8) consists in an electrical heating resistance disposed in the body (40) of said dispensing unit.

3. The coffee machine of claim 1 or 2, **characterized in that** said dedicated boiler comprises:
- a chamber (30) with water to be heated,
- an electrical heating resistance (6) disposed in said chamber (30) and adapted to come in contact with water to be heated, and
- a temperature probe (7) disposed in said chamber (30),
wherein said electrical heating resistance (6) and said temperature probe (7) of the dedicated boiler are interfaced with said electronic control unit (5).

4. The coffee machine of claim 3, **characterized in that** said control unit (5) is adapted to manage the temperature of the body (40) of the dispensing unit (4) independently from the temperature of the water of the corresponding dedicated boiler (3).

5. The coffee machine of any one of the preceding claims, **characterized in that** it also comprises an electrovalve (10) disposed in a connection pipe (43) between the inlet conduit (41) and the outlet conduit (42) of the body of the dispensing unit.

6. The coffee machine of any one of the preceding claims, **characterized in that** said main boiler comprises:
- a chamber (20) with water to be heated,
- an electrical heating element (12) disposed in said chamber (20) and adapted to come in contact with water to be heated, and
- a pressure probe (11) disposed in said chamber (30) to detect steam pressure,
wherein said electrical heating resistance (12) and said pressure probe (11) of the main boiler are interfaced with said electronic control unit (5).
